# EUROPÄISCHE PATENTANMELDUNG

(11) **EP 0 617 067 A1**
(43) Veröffentlichungstag der Anmeldung: **28.09.1994**
(21) Anmeldenummer: 94103879.6
(22) Anmeldetag: 14.03.1994
(51) Int. Cl.: C08G 18/16, C08G 18/22, B32B 5/20

(54) **Verfahren zur Herstellung von Polyurethanschaumstoffen**

(30) Priorität: 25.03.1993 DE 4309689
(71) Anmelder: BAYER AG, 51368 Leverkusen (DE)
(72) Erfinder: Liman, Ulrich, Dr., D-40764 Langenfeld (DE); Eickhaus, Heinz, Dipl.-Ing., D-51515 Kürten (DE); Steinert, Gerd, Dr., D-51381 Leverkusen (DE)

(57) **Zusammenfassung**

Ein Verfahren zur Herstellung von Polyurethanschaumstoffen, insbesondere zur Herstellung von Verbundkörpern durch Hinterschäumen einer Kunststoffolie als Deckschicht durch Umsetzung einer Polyisocyanatkomponente mit einer Salzgruppen-freien Polyolkomponente in Gegenwart von mindestens einem Treibmittel, Alkalicarboxylaten als Katalysatoren und weiteren Hilfs- und Zusatzmitteln, wobei ausgewählte, hochpolare organische Verbindungen mit einem Dipolmoment von über 2,0 Debye in einer Menge von 0,01 bis 30 Gew.-%, bezogen auf die Polyolkomponente, als Verträglichmacher für die Alkalicarboxylate mitverwendet werden.

## Beschreibung

Die Erfindung betrifft ein neues Verfahren zur Herstellung von wassergetriebenen Polyurethanschaumstoffen aus an sich bekannten Ausgangsmaterialien unter Mitverwendung von Alkalisalzen von organischen Carbonsäuren als Katalysatoren, sowie unter Mitverwendung von speziellen Zusatzmitteln, die die Verträglichkeit dieser Katalysatoren mit den übrigen Ausgangsmaterialien wesentlich erhöhen. Das Verfahren eignet sich insbesondere zur Her stellung von Verbundkörpern durch Hinterschäumen von Kunststoffen mit derartigen Reaktionsgemischen. Die Erfindung betrifft auch die hierbei erhaltenen Verbundkörper.

Wassergetriebene Schaumstoffe, insbesondere Folienverbundkörper, die durch Hinterschäumen einer Kunststofffolie mit einem zu einem weichen oder halbharten Polyurethanschaumstoff ausreagierenden Reaktionsgemisch hergestellt werden, sind von großer technischer Bedeutung und werden beispielsweise in größerem Umfang zur Innenausstattung von Kraftfahrzeugen, Flugzeugen oder zur Herstellung von Polstermöbeln verwendet. Für die meisten dieser Einsatzgebiete ist es wesentlich, daß die Schaumstoffe neben guten mechanischen Eigenschaften keinen oder nur geringen Einfluß auf die Wärmealterung der Deckschicht aufweisen und die eingesetzten Rohstoffe auch nach längerer Lagerung eine gleichbleibende Reaktivität aufweisen.

Die in den Reaktionsgemischen oftmals als Katalysatoren eingesetzten tertiären Amine sind mit dem Nachteil behaftet, daß sie zu einem schlechten Wärmestand der Schaumstoffe führen, so daß bereits versucht wurde, diese Amine beispielsweise durch Alkalimetallsalze von Carbonsäuren wie beispielsweise Kaliumacetat zu ersetzen. Die alleinige Katalyse mit derartigen Katalysatoren ist jedoch mit dem Nachteil einer zu langen Entformzeit oder (bei erhöhter Katalysatorkonzentration) zu kurzer Startzeiten verknüpft. Zudem führt der Einsatz von derartigen Alkalimetallsalzen zu dem Problem, daß, insbesondere bei Temperaturschwankungen während der Lagerung und des Transports der Polyolkomponente, ein irreversibler Ausfall der Salze beobachtet werden muß, was ein sehr großes praktisches Problem darstellt. Die Verwendung von organischen Zinnverbindungen als Katalysatoren scheitert ihrerseits oftmals an deren Hydrolyselabilität, was in wasserhaltigen Polyolkomponenten eine konstante Aktivierung über einen längeren Lagerzeitraum unmöglich macht.

Die DE-PS 4 029 081 empfiehlt die Verbindung von Salzen von Hydroxycarbonsäuren, die zwar bei Raumtemperatur in den üblichen Polyolkomponenten löslich sind, jedoch bei Temperaturen von oberhalb 40°C entmischen und nach Abkühlung auf Raumtemperatur einen unlöslichen Bodensatz bilden.

Die US-PS 4 868 043 empfiehlt die Verwendung als Katalysatoren von in der Alkalisalz-Form vorliegenden Estercarbonsäuren aus (i) intramolekularen Carbonsäureanhydriden und (ii) Ethergruppen-freien einwertigen Alkoholen und insbesondere von in der Alkalisalz-Form vorliegenden Halbestern aus (i) intramolekularen Carbonsäureanhydriden und (ii) langkettigen Diolen. Die letztgenannten, gemäß Vorveröffentlichung bevorzugt einzusetzenden Katalysatoren sind jedoch mit dem Nachteil behaftet, daß sie wegen ihrer Monofunktionalität im Sinne der Isocyanat-Additionsreaktion zu Kettenabbruchsreaktionen und damit häufig zu einer schlechten Verarbeitbarkeit des Reaktionsgemischs und zu Schaumstoffen mit verminderten mechanischen Eigenschaften führen. Die Hydroxyl-und Ethergruppen-freien Estercarbonsäuresalze, die gemäß Vorveröffentlichung nicht zu den bevorzugten Katalysatoren gehören, weisen eine unbefriedigende Verträglichkeit mit den übrigen Reaktionspartnern auf. Beiden Katalysator-Typen der Vorveröffentlichung gemeinsam ist schließlich der Umstand, daß ihre Verwendung zu Reaktionsgemischen führt, die bezüglich des Verhältnisses von (erwünschter langer) Startzeit zu (erwünschter kurzer) Entformungszeit den Anforderungen der Praxis noch nicht inm optimaler Weise entsprechen.

Die eigenen älteren deutschen Patentanmeldungen P 42 18 840.7 und P 42 32 420.3 empfehlen die Verwendung von Alkalisalzen von mindestens zwei Hydroxylgruppen pro Molekül aufweisenden bzw. praktische Hydroxylgruppenfreien Estercarbonsäuren als Katalysatoren, um so den genannten Schwierigkeiten Herr zu werden.

Wie jetzt jedoch überraschend gefunden wurde, können die angesprochenen Probleme auf einfache Weise unter Verwendung der nachstehend näher beschriebenen erfindungswesentlichen Stabilisatoren e1) in optimaler Weise gelöst werden. Die erfindungswesentlichen Zusatzmittel e1) bewirken nicht nur eine ganz erhebliche Erhöhung der Verträglichkeit auch von einfachen Alkalicarboxylaten mit den üblichen Polyetherpolyolen sondern gleichzeitig eine Erhöhung der katalytischen Wirkung dieser Salze auf die Isocyanat-Polyadditionsreaktion.

Gegenstand der Erfindung ist ein Verfahren zur Herstellung von Polyurethanschaumstoffen durch Umsetzung
a) einer Polyisocyanatkomponente mit
b) einer Salzgruppen-freien Polyolkomponente
in Gegenwart von
c) mindestens einem Treibmittel,
d) Alkalicarboxylaten, und
e) weiteren Hilfs- und Zusatzmitteln,
dadurch gekennzeichnet, daß man als Komponente e) von den Komponenten a) bis d) verschiedene tert.-Aminogruppen-, Metall- und Phosphor-freie organische Verbindungen e1) mit einem Dipolmoment von über 2,0 Debye in einer Menge von 0,01 bis 30 Gew.-%, bezogen auf das Gewicht der Komponente b), gegebenenfalls neben weiteren Hilfs- und Zusatzmitteln e2) verwendet.

Gegenstand der Erfindung ist insbesondere auch die Herstellung von Verbundkörpern durch Hinterschäumen einer Kunststoffolie als Deckschicht mit einem zu hohen Polyurethanschaumstoff ausreagierenden Reaktionsgemisch der vorstehend genannten Art.

Gegenstand der Erfindung sind schließlich auch die so erhaltenen Verbundkörper.

Bei der beim erfindungsgemäßen Verfahren einzusetzenden Polyisocyanatkomponente a) handelt es sich um beliebige Di- oder Polyisocyanate, insbesondere um solche mit aromatisch gebundenen Isocyanatgruppen. Vorzugsweise werden 2,4-Diisocyanatotoluol, dessen technische Gemische mit 2,6-Diisocyanatotoluol (TDI), sowie insbesondere bei Raumtemperatur flüssige Polyisocyanatgemische der Diphenylmethanreihe (MDI) eingesetzt. In diesem Zusammenhang insbesondere von Interesse sind Polyisocyanatgemische, wie sie durch Phosgenierung von Anilin-Formaldehyd-Kondensaten erhalten werden bzw. aus derartigen Phosgenierungsprodukten hergestellte Destillationsfraktionen bzw. Destillationsrückstände oder Urethan-, Carbodiimid- und/oder Uretdiongruppen aufweisende Modifizierungsprodukte derartiger Polyisocyanate oder Polyisocyanatgemische der Diphenylmethanreihe. Die bevorzugten, gegebenenfalls chemisch modifizierten Polyisocyanatgemische der Diphenylmethanreihe weisen im allgemeinen einen NCO-Gehalt von ca. 25 bis 33 Gew.-% auf.

Bei der Komponente b) handelt es sich insbesondere um Polyetherpolyole oder Gemische von Polyetherpolyolen mit einem (mittleren), aus Hydroxylgruppengehalt und Hydroxylfunktionalität errechenbaren Molekulargewicht von 400 bis 12 000, vorzugsweise 2 000 bis 6 000, und einer (mittleren) Hydroxylfunktionalität von 2 bis 8, vorzugsweise 2 bis 4, oder um Gemische aus derartigen Polyetherpolyolen mit mehrwertigen Alkoholen eines unter 400 liegenden Molekulargewichtes, die gegebenenfalls in einer Menge von bis zu 25 Gew.-%, bezogen auf das Gewicht der Polyetherpolyole mitverwendet werden können.

Die in Betracht kommenden Polyetherpolyole sind solche der an sich bekannten Art, wie sie durch Alkoxylierung geeigneter Startermoleküle, in an sich bekannter Weise zugänglich sind. Geeignete Startermoleküle sind beispielsweise Ethylenglykol, Propylenglykol, Trimethylolpropan, Glycerin, Sorbit, Pentaerythrit oder Saccharose bzw. beliebige Gemische derartiger mehrwertiger Alkohole. Ganz besonders bevorzugt werden Polyetherpolyole eingesetzt, die durch Alkoxylierung von trifunktionellen Startermolekülen, insbesondere von Trimethylolpropan und/oder Glycerin erhalten worden sind. Bei den Alkylenoxiden, die bei der Alkoxylierungsreaktion zum Einsatz gelangen, handelt es sich insbesondere um Propylenoxid oder Ethylenoxid bzw. um Gemische dieser beiden Alkylenoxide. Die genannten Alkylenoxide können bei der Alkoxylierungsreaktion auch nacheinander zum Einsatz gelangen. Weitere im Prinzip geeignete Polyole, die als Komponente b) zum Einsatz gelangen können, sind beispielsweise in der EP-A 0 380 993 beschrieben.

Auch niedermolekulare mehrwertige Alkohole eines unter 400 liegenden Molekulargewichts wie z.B. Ethylenglykol, Propylenglykol, Diethylenglykol, Dipropylenglykol, Glycerin, Trimethylolpropan oder deren Gemische können in Mengen von bis zu 25 Gew.-% Teil der Komponente b) sein.

Bei der Komponente c) handelt es sich vorzugsweise um Wasser. Neben Wasser können als Treibmittel auch beispielsweise halogenierte Kohlenwasserstoffe wie Trifluorchlormethan, fluorierte Kohlenwasserstoffe, leichtflüchtige organische Lösungsmittel wie z.B. Pentan, Aceton oder Diethylether eingesetzt werden. Die Mitverwendung solcher Treibmittel neben Wasser ist allerdings weniger bevorzugt.

Das als Treibmittel eingesetzte Wasser wird im allgemeinen in Mengen von 0,05 bis 10 Gew.-%, bezogen auf das Gewicht der Komponente b) eingesetzt.

Bei dem Katalysatoren d) handelt es sich um Alkalisalze von organischen Carbonsauren. Die Katalysatoren d) werden im allgemeinen in Mengen von 0,1 bis 10 Gew.-%, bezogen auf das Gewicht der Komponente b) eingesetzt.

Bevorzugte Katalysatoren d) sind die Natrium- und Kaliumsalze, insbesondere die Kaliumsalze von Ether- und Estergruppen-freien, gegebenenfalls Aminogruppen aufweisenden Carbonsäuren des Molekulargewichtsbereichs 46 bis 500. Beispielhaft genannt seien die Natrium-bzw. Kaliumsalze von Essigsäure, Propionsäure, Oxalsäure, Malonsäure, Maleinsäure, Bernsteinsäure, Fumarsäure, Acrylsäure, Methacrylsäure, Weinsäure, Äpfelsäure, Ameisensäure, Salicylsäure, Glutarsäure, Benzoesäure, Glycin, Alanin, Valin, Leucin, Methionin, Serin, Threonin, Tyrosin, Asparagin, Glutamin, Cystein, Lysin, Arginin, Histidin, Asparaginsäure, Glutaminsäure, Isoleucin, Phenylalanin, Prolin oder Citronensäure.

Neben diesen einfachen Alkalisalzen kann die Komponente d) ganz oder teilweise aus anderen Alkalisalzen von Carbonsäuren stehen. Beispielhaft genannt seien die Alkalisalze von Ester- und/oder Ethergruppen-aufweisenden Carbonsäuren gemäß US-PS 4 868 043, gemäß deutscher Patentanmeldung P 42 32 420.3 oder gemäß deutscher Patentanmeldung P 42 18 840.7.

Bei den Hilfs- und Zusatzmitteln e) handelt es sich einerseits um die erfindungswesentlichen Stabilisatoren e1), sowie gegebenenfalls um weitere Hilfs- und Zusatzmittel e2).

Bei den erfindungswesentlichen Stabilisatoren e1) handelt es sich um tert.-Aminogruppen-, Metall- und Phosphor-freie, polare, in den üblichen Polyetherpolyolen lösliche organische Verbindungen mit einem Dipolmoment von mehr als 2,0 Debye. Diese Verbindungen weisen vorzugsweise ein Molekulargewicht von 58 bis 500 auf. Geeignet sind beispielsweise Harnstoff, Thioharnstoff, Guanidin, N,N'-Dimethylharnstoff, Tetraethylharnstoff, N(n-Propyl)-harnstoff, Formaldehyd, Aceton, Nitrobenzol, Acetonitril oder Gemische von derartigen hochpolaren Verbindungen.

Die erfindungswesentlichen Stabilisatoren e1) werden in Mengen von 0,01 bis 30 Gew.-%, bezogen auf das Gewicht der Komponente b) eingesetzt. Besonders bevorzugte Stabilisatoren e1) sind Harnstoff, Guanidin und Aceton, Die beiden erstgenannten Verbindungen werden im allgemeinen in Mengen von 0,01 bis 5 Gew.-%, das Aceton in Mengen von 1,0 bis 30 Gew.-%, jeweils bezogen auf das Gewicht der Komponente b), eingesetzt.

Weitere gegebenenfalls mitzuverwendende Hilfs- und Zusatzmittel e2) sind beispielsweise klassische Katalysatoren wie Triethylendiamin, Bis-(2-dimethyl-aminoethyl)-ether, N,N-Dimethylethanolamin, N,N,N',N'',N''-Pentamethyldiethylentriamin, N-Methylmorpholin, Dimethylbenzylamin, tertiäre Alkylphosphine, Zinn(II)-octoat, Dibutylzinn-(IV)-dilaurat, sowie Chelate von Metallen, wie z.B. Chelate des Acetylacetonats von Magnesium, Zirkon oder Nickel. Die Mitverwendung derartiger, weiterer Katalysatoren ist keineswegs bevorzugt. Sie kommen, falls überhaupt, in Mengen von maximal 5 Gew.-%, bezogen auf das Gewicht der Komponente b) zum Einsatz.

Weitere, gegebenenfalls mitzuverwendende Hilfs- und Zusatzmittel e2) sind beispielsweise die üblichen Zusatzstoffe wie Flammschutzmittel, Füllstoffe, Pigmente, Weichmacher, Antistatika oder Zellregulierungsmittel.

Bei der Durchführung des erfindungsgemäßen Verfahrens werden die genannten Ausgangsmaterialien in solchen Mengenverhältnissen miteinander zur Reaktion gebracht, die einer NCO-Kennzahl (Anzahl der NCO-Gruppen dividiert durch die Anzahl der gegenüber NCO-Gruppen reaktionsfähigen Gruppen, multipliziert mit 100) von 50 bis 140 entspricht. Im allgemeinen werden die Komponenten b) bis e) zu einer "Polyolkomponente" vermischt, die dann nach den üblichen Methoden der Polyurethanschaumstoffherstellung mit der Polyisocyanatkomponente zur Reaktion gebracht wird.

Das erfindungsgemäße Verfahren eignet sich zur Herstellung von beliebigen Schaumstoffen. Vorzugsweise handelt es sich bei den erfindungsgemäßen Verfahrensprodukten jedoch um weiche oder halbharte Polyurethanschaumstoffe (Stauchhärte von 20 bis 400 KPa bei 40 % Verformung) einer Rohdichte von 30 bis 500, vorzugsweise 70 bis 200 kg/m³, wie sie in an sich bekannter Weise zum Hinterschäumen von Kunststoffolien zwecks Herstellung von Folienverbundwerkstoffen für Polsterzwecke bzw. den Innenbereich von Kraftfahrzeugen, Flugzeugen oder Schiffen (Armaturenbretter, Türinnenverkleidungen, Armlehnen, Kopfstützen u.dgl.) zum Einsatz gelangen.

Für diesen speziellen Zweck geeignete Kunststoffolien sind alle beliebigen Deckschichten, die bisher bei der Herstellung von Folienverbundwerkstoffen durch Hinterschäumen von Kunststoffolien mit Polyurethanschaumstoffen hergestellt worden sind. Beispielhaft genannt seien Folien aus Polyvinylchlorid (PVC), Polyurethan, Polymerblends aus PVC und ABS oder thermoplastischen Polyolefinen.

Vorzugsweise erfolgt die Durchführung des erfindungsgemäßen Verfahrens dergestalt, daß man die Innenwände einer Form zumindest teilweise mit der zu hinterschäumenden Kunststoffolie auskleidet und dann das Formwerkzeug mit dem schäumfähigen Gemisch befüllt. Die für die Innenauskleidung der Formel verwendeten Folien können in an sich bekannter Weise vorgeformt werden, wobei man sich der bekannten Technik des Tiefziehens bzw. "Powder-Slush" bedient.

Die Menge des in die Form eingetragenen schäumfähigen Gemischs wird im allgemeinen so bemessen, daß Schaumstoffe einer Rohdichte von 30 bis 500, vorzugsweise 70 bis 200 kg/m³ resultieren.

Das beschriebene erfindungsgemäße Verfahren ist jedoch auch auf alle anderen wassergetriebenen PUR-Schaumstoffherstellungen zu übertragen.

Die nachfolgenden Beispiele dienen der weiteren Erläuterung des erfindungsgemäßen Verfahrens.

### Beispiele

### 1. Polyolkomponenten

100 Gew.-Teile eines Polyetherpolyols, OH-Zahl 28, hergestellt durch Propoxylierung von Trimethylolpropan und anschließende Ethoxylierung des Propoxylierungsprodukts (PO:EO-Gewichtsverhältnis = 85:15), werden mit den in Tabelle 1 angegebenen Mengen Alkalisalz gelöst in 2,3 Gew.-Teilen Wasser und den ebenfalls in Tabelle 1 angegebenen Mengen Harnstoff vermischt und, sofern speziell erwähnt, während 16 h auf 60°C erwärmt. Die getrübten Mischungen werden jeweils ohne Rühren auf Raumtemperatur (23° C ± 3° C) abgekühlt und die Homogenität nach weiteren 24 h bewertet, ob eine Trübung oder ein Bodensatz bestehen bleibt. Die unter 3. beschriebene Reaktivitätsprüfung findet in jedem Fall bei Raumtemperatur statt.

### 2. Polyisocyanatkomponente

In den nachfolgenden Beispielen wurde ein Polyisocyanatgemisch der Diphenylmethanreihe mit einer Viskosität (23° C) von 200 mPa.s und einem NCO-Gehalt von 32 Gew.-% verwendet.

### 3. Erfindungsgemäßes Beispiel und Vergleichsbeispiele

Die Herstellung der Schaumstoffe erfolgt nach der Methode der Handverschäumung. Dabei wird jeweils die Polyolkomponente während 30 s vorgerührt (Rührgeschwindigkeit: 1000 U/min). Anschließend wird die Polyisocyanatkomponente zugesetzt und während weiterer 10 s bei Raumtemperatur gerührt. Die NCO-Kennzahl beträgt in allen Beispielen 100.

Die Reaktivität der Polyolkomponente wurde durch die Start-, Steig- und Abbindezeiten in Parallelversuchen bestimmt. Bei Proben, die einen Bodensatz oder eine Trübung aufwiesen, wurde die für die Verschäumung notwendige Menge von oben aus dem Standbehälter abgenommen. Die Startzeit ist dann die Zeit, die vom Zeitpunkt der Polyisocyanatzugabe bis Beginn des Schäumvorganges verstreicht; die Steigzeit ist die Zeit, die vom Zeitpunkt der Polyisocyanatzugabe bis zur Beendigung des Schäumvorganges verstreicht; die Abbindezeit ist die Zeit, die vom Zeitpunkt der Polyisocyanatzugabe bis zur Klebfreiheit des Schaumstoffs verstreicht. Weitere Details können den nachstehenden Tabellen 2 und 3 entnommen werden. Aus den gefundenen Daten geht insbesondere die verträglichmachende und cokatalytische Wirkung des erfindungswesentlichen Zusatzmittels e1) (Harnstoff) hervor.

**Tabelle 1**

| Löslichkeit von Kaliumaceat in 100 GT Polyether in Abhängigkeit zur Harnstoffkonzentration. | | | | |
|---|---|---|---|---|
| Harnstoffkonzentration | 0 GT | 0,2 GT | 0,5 GT | 1,0 GT |
| 0,2 GT KAc | - | + | + | + |
| 0,25 GT KAc | - | + | + | + |
| 0,3 GT KAc | - | - | + | + |
| 0,4 GT KAc | - | - | + | + |
| - = nicht löslich + = löslich GT = Gewichtsteile | | | | |

**Tabelle 2**

| Reaktivität der Polyolkomponente mit 0,4 GT KAc und 0 GT Harnstoff bei unterschiedlichen Lagertemperaturen. | | | |
|---|---|---|---|
| Polyol Lagertemperatur | Startzeit ± 2 sec | nach 16 h Steigzeit ± 3 sec | Abbindezeit ± 5 sec |
| RT * | 17 sec | 115 sec | 145 sec |
| 60°C** | 20 sec | 130 sec | 170 sec |

| | | | |
|---|---|---|---|
| * Probe zeigt keine Trübung nach Lagerung | | | |
| ** Probe zeigt starke Trübung nach Lagerung | | | |

**Tabelle 3**

| Reaktivität der Polyolkomponente mit 0,4 % KAc und 1,0 % Harnstoff nach 16-stündiger Lagerung bei Raumtemperatur bzw. 60° C. | | | |
|---|---|---|---|
| Polyol-Lagertemperatur | Startzeit ± 2 sec | Steigzeit ± 3 sec | Abbindezeit ± 5 sec |
| RT | 15 sec | 77 sec | 90 sec |
| 60° C*** | 16 sec | 79 sec | 93 sec |

| | | | |
|---|---|---|---|
| *** Probe zeigt schwache Trübung nach Lagerung | | | |

## Patentansprüche

1. Verfahren zur Herstellung von Polyurethanschaumstoffen durch Umsetzung
a) einer Polyisocyanatkomponente mit
b) einer Salzgruppen-freien Polyolkomponente
in Gegenwart von
c) mindestens einem Treibmittel,
d) Alkalicarboxylaten, und
e) weiteren Hilfs- und Zusatzmitteln,
dadurch gekennzeichnet, daß man als Komponente e) von den Komponenten a) bis d) verschiedene tert.-Aminogruppen-, Metall- und Phosphor-freie organische Verbindungen e1) mit einem Dipolmoment von über 2,0 Debye in einer Menge von 0,01 bis 30 Gew.-%, bezogen auf das Gewicht der Komponente b), gegebenenfalls neben weiteren Hilfs- und Zusatzmitteln e2) verwendet.

2. Verfahren gemäß Anspruch 1 zur Herstellung von Verbundkörpern durch Hinterschäumen einer Kunststoffolie als Deckschicht mit einem zu einem Polyurethanschaumstoff ausreagierenden Reaktionsgemisch, bestehend im wesentlichen aus den in Anspruch 1 genannten Komponenten a), b), c), d) und e), dadurch gekennzeichnet, daß man als Komponente e) von den Komponenten a) bis d) verschiedene tert.-Aminogruppen-, Metall- und Phosphor-freie organische Verbindungen e1) mit einem Dipolmoment von über 2,0 Debye in einer Menge von 0,01 bis 30 Gew.-%, bezogen auf das Gewicht der Komponente b), gegebenenfalls neben weiteren Hilfs-und Zusatzmitteln e2) verwendet.

3. Verfahren gemäß Anspruch 1 und 2, dadurch gekennzeichnet, daß man als Komponente a) bei Raumtemperatur flüssige, gegebenenfalls Urethan-, Carbodiimid- und/oder Uretdiongruppen aufweisende Polyisocyanatgemische der Diphenylmethanreihe verwendet.

4. Verfahren gemäß Anspruch 1 und 3, dadurch gekennzeichnet, daß man als Komponented b) Polyetherpolyole oder Gemische von Polyetherpolyolen einer (mittleren) Hydroxylfunktionalität von 2 bis 4 bei einem Molekulargewicht von 400 bis 12.000, oder Gemische derartiger Polyetherpolyole mit bis zu 10 Gew.-%, bezogen auf das Gewicht der Polyetherpolyole an 2-und/oder 3-wertigen Alkoholen eines unter 400 liegenden Molekulargewichts verwendet.

5. Verfahren gemäß Anspruch 1 bis 4, dadurch gekennzeichnet, daß man als Komponente c) Wasser verwendet.

6. Verfahren gemäß Anspruch 1 bis 5, dadurch gekennzeichnet, daß man als Komponente d) Natrium- oder Kaliumsalze von Ether- und Estergruppen-freien organischen Carbonsäuren des Molekulargewichtsbereichs 46 bis 500 in einer Menge von 0,1 bis 10 Gew.-%, bezogen auf das Gewicht der Komponente b), verwendet.

7. Verfahren nach Anspruch 1 bis 6, dadurch gekennzeichnet, daß man als Komponente d) Kaliumacetat verwendet.

8. Verfahren gemäß Anspruch 1 bis 7, dadurch gekennzeichnet, daß man als Komponente e1) Harnstoff verwendet.

9. Verfahren gemäß Anspruch 2 hergestellte Verbundkörper.
